# EUROPÄISCHE PATENTANMELDUNG

(11) **EP 1 142 809 A2**
(43) Veröffentlichungstag der Anmeldung: **10.10.2001**
(21) Anmeldenummer: 01107544.7
(22) Anmeldetag: 27.03.2001
(51) Int. Cl.: B65G 67/60, B65G 69/18

(54) **Anlage zur Entladung von insbesondere schwerfliessenden Schüttgütern**

(30) Priorität: 06.04.2000 DE 10016980
(71) Anmelder: Schwäbische Hüttenwerke GmbH, 73433 Aalen-Wasseralfingen (DE)
(72) Erfinder: Bartnicki, Karsten, 66839 Schmelz (DE); Fenske, Jürgen, 74564 Crailsheim (DE); Dietterle, Erwin, 73463 Westhausen (DE); Schmid, Thomas, 73460 Hüttlingen (DE)
(74) Vertreter: Riedel, Peter

(57) **Zusammenfassung**

Eine Anlage zur Entladung von insbesondere schwerfließenden Schüttgütern aus Transportfahrzeugen wie Schiffen (3) oder Lastkraftwagen umfaßt mindestens eine längliche Fördereinrichtung (6) und einen bezogen auf die Längsachse der Fördereinrichtung (6) ortsveränderlichen Kran (5). Dieser Kran (5) besitzt einen Greifer (30), welcher vertikal und im wesentlichen quer zur Längsachse der Fördereinrichtung (6) bewegbar ist. Außerdem ist ein in Längsrichtung der Fördereinrichtung (6) verfahrbares Annahmesilo (31) vorgesehen, das an seiner Oberseite eine Eintrittsöffnung (32) für den Greifer (30) in den Innenraum des Annahmesilos (31) aufweist. An der Unterseite ist das Annahmesilo mit einer Abwurföffnung (35) versehen, wobei diese Auswurföffnung (35) sich stets über der Fördereinrichtung (6) befindet.

## Beschreibung

Die Erfindung betrifft eine Anlage zur Entladung von insbesondere schwerfließenden Schüttgütern aus Transportfahrzeugen.

Zum Transport von Schüttgütern dienen häufig Schiffe und Lastkraftwagen. Schüttgüter enthalten je nach Art einen mehr oder weniger großen Anteil von Staub, so daß am Schüttgut vorbeistreichende Luft Staub aufnimmt und fortträgt. In vielen Fällen sind jedoch solche Emissionen unerwünscht oder sogar untersagt bzw. nur unterhalb vorgegebener Grenzwerte zulässig. Die Einlagerung von Schüttgütern bis zu ihrer weiteren Verwendung oder zum Abtransport erfolgt üblicherweise in Silos, die durch eine Befüllöffnung im oberen Bereich gefüllt werden und die im Bereich des Bodens Mittel zur Entnahme des Schüttgutes aufweisen.

Das Aufwirbeln von Staub ist insbesondere beim Umschlag von Schüttgütern intensiv, das heißt immer dann, wenn das Schüttgut gegenüber der Umgebungsluft in Bewegung ist. Der Transport von Schüttgütern erfolgt daher häufig in geschlossenen Behältern, beispielsweise in verschließbaren Laderäumen von Schiffen oder Lastkraftwagen. Bei der Entleerung der Laderäume von Schiffen kann für manche Schüttgutart eine Absauganlage eingesetzt werden, andere Schüttgüter werden mittels Kränen entladen. Hierbei ist das Aufnehmen des Schüttgutes in einem Greifer des Krans, das Verfahren des Greifers zu einer Fördereinrichtung und die Materialübergabe als im wesentlichen ursächlich für Verschmutzungen und Umweltbelastungen anzusehen. Zu den besonders staubhaltigen, schwerfließenden Schüttgütern gehört zerkleinertes Altholz.

Der vorliegenden Erfindung liegt die Aufgabe zugrunde, eine Anlage zur Entladung von insbesondere schwerfließenden Schüttgütern aus Transportfahrzeugen zu schaffen, mit welcher der Schüttgutumschlag weitestgehend frei von Staubemissionen möglich ist.

Diese Aufgabe wird erfindungsgemäß durch eine Anlage mit den Merkmalen des Anspruchs 1 gelöst.

Die Aufnahme des Schüttgutes vom Greifer erfolgt in einem im wesentlichen geschlossenen Laderaum des Transportfahrzeugs, insbesondere eines Frachtschiffes bzw. Lastkahns. In einer ausreichenden Höhe wird der Greifer im wesentlichen quer zur Längsachse einer Fördereinrichtung bewegt, bis der Greifer annähernd über dieser Fördereinrichtung befindlich ist. Um einer Staubemission entgegenzuwirken, taucht der Greifer durch eine an der Oberseite des Annahmesilos angeordnete Eintrittsöffnung in den Innenraum des Annahmesilos ein und wird erst in diesem Annahmesilo geöffnet. Da dieses öffnen und Auswerfen des Schüttgutes innerhalb eines nahezu geschlossenen Gehäuses erfolgt, wird die Staubemission gegenüber bisherigen Anlagen deutlich reduziert. Die im unteren Bereich des Annahmesilos vorgesehene Austrageeinrichtung ist so angeordnet, daß sich die Abwurföffnung stets über der Fördereinrichtung befindet, die dem Weitertransport des Schüttgutes zu einem nachgeordneten Silo dient.

Gemäß einer bevorzugten Weiterbildung der Erfindung weist der Kran ein Fahrwerk auf, mit dem dieser parallel zur Längsachse der Fördereinrichtung verfahrbar ist. Auf diese Weise kann der Kran auf einer Kaimauer entlang eines zu entladenden Schiffes verfahren werden, so daß die Bewegung des Greifers zwischen dem Laderaum des Schiffes und der Fördereinrichtung bzw. des darüber verfahrbaren Annahmesilos stets eine orthogonal zur Längsachse der Fördervorrichtung erfolgende Bewegung ist. Zweckmäßigerweise ist das Annahmesilo in einem vom Fahrwerk getragenes Krangestell installiert. Auf diese Weise ist garantiert, daß das Annahmesilo in gleicher Weise wie der Kran verfahren wird und es ist lediglich ein gemeinsames Fahrwerk und Gestell erforderlich. Zur Bewegung des Greifers zwischen dem jeweiligen Laderaum und dem Annahmesilo hängt der Greifer an einem Kranseil, das über eine Laufkatze geführt ist, welche auf einem am Gestell befestigten Kranausleger verfahrbar angeordnet ist.

Um den Emissionsgrad von Staubpartikeln aus dem Annahmesilo weiter zu reduzieren, ist es vorteilhaft, daß das Annahmesilo mit einem Gerät zur Staubabsaugung versehen ist. Dabei ist es zweckmäßig, das Gerät zur Staubabsaugung unmittelbar an dem Annahmesilo anzuordnen und mit einem Förderer zur Rückführung fester Partikel in den Innenraum des Annahmesilos zu versehen. Auf diese Weise sind kurze Wege der Staubabsaugung realisiert und der gasförmige Anteil kann nach der Trennung von den festen Partikeln in die Umgebungsluft ausgestoßen werden, während die festen Partikel unmittelbar in den Innenraum des Annahmesilos zurückgeführt werden.

Als Fördervorrichtung, auf die das Schüttgut von dem Annahmesilo abgeworfen wird, ist vorzugsweise mindestens ein Bandförderer vorgesehen, wobei die Länge dieser Bandfördereinrichtung ausreichend groß bemessen werden sollte, um auch bei entsprechend langen Schiffen bzw. Lastkähnen problemlos die Entladung über die gesamte Laderaumerstreckung zu ermöglichen. Der Bandförderer ist mit einer über diesem angeordneten Abdeckung versehen, um eine Staubemission während des Transports auf dem Bandförderer zu vermeiden. Diese Abdeckung ist an jeder beliebigen Stelle über die Länge des Bandförderers partiell zu öffnen, so daß stets ein kurzer Abschnitt, über dem sich gerade die Abwurföffnung des Annahmesilos befindet, zum Abwurf des Schüttgutes zugänglich ist.

Damit das Schüttgut aus dem Annahmesilo durch die Abwurföffnung zuverlässig ausgetragen wird, ist im unteren Bereich des Annahmesilos eine zur Abwurföffnung fördernde Austrageeinrichtung vorgesehen. Dadurch wird verhindert, daß das Schüttgut Brücken bildet und nicht nachrutscht. Um einen möglichst hohen Durchsatz der Schüttgutmenge zu erreichen, ist es von Vorteil, daß die Austrageeinrichtung mindestens zwei, idealerweise jedoch vier Förderschnecken umfaßt. Um einen möglichst einfachen Aufbau einer vier Förderschnecken umfassenden Austrageeinrichtung zu erreichen, ist es zweckmäßig, je zwei Förderschnecken auf einer gemeinsamen Welle anzuordnen, wobei die Förderschnecken gegenläufig gewendelt sind. Jede der Wellen kann mit einem eigenen Antriebsmotor gekoppelt sein.

Vorzugsweise besteht der Greifer aus zwei Gehäuseteilen, die den Hohlraum im Greifer mindestens annähernd vollständig schließen. Auf diese Weise wird ein Staubaustrag vermieden und verhindert, daß während des Verfahrens des Greifers vom Laderaum zum Annahmesilo Schüttgut verloren gehen kann. Speziell wird bei der Konstruktion des Greifers darauf geachtet, daß kein Material auf Rändern oder in Ecken liegen bleiben kann.

Die als Bandförderer ausgestaltete Fördereinrichtung weist an einer bestimmten Stelle, bezogen auf die Gesamtlänge der Fördereinrichtung, eine Abwurfstelle auf, an der das Schüttgut an eine weitere Fördereinrichtung übergeben wird. Zur Aufnahme und Zwischenspeicherung des Schüttgutes ist mindestens ein Vorratssilo vorgesehen, das der weiteren Fördereinrichtung, die sich an dem Bandförderer anschließt, nachgeschaltet ist. Da die Beschickung des Vorratssilos üblicherweise durch eine Öffnung im oberen Bereich des Silogehäuses erfolgt, ist vorgesehen, daß zwischen der weiteren Fördereinrichtung und dem Vorratsbehälter zusätzliche Fördereinrichtungen angeordnet sind, die mindestens einen Kettenförderer und ein Becherwerk umfassen. Dabei ist es zweckmäßig, daß zumindest an einem Teil, vorzugsweise jedoch an allen übergabestellen der jeweiligen Fördereinrichtungen, Mittel zur Staubabsaugung vorgesehen sind. In weiterer Ausgestaltung ist eine Annahmehalle zur Entleerung von Lastkraftwagen vorgesehen, wobei unterhalb dieser Annahmehalle das Schüttgut von einer in Richtung auf das Vorratssilo fördernden Fördereinrichtung aufnehmbar ist. Zur Vermeidung von Emissionen aus dem Vorratssilo ist dieses vorzugsweise mit einem Bunkeraufsatzfilter versehen. Ebenso ist die Annahmehalle mit einer Absaugung und Filtereinheit versehen.

Ein Ausführungsbeispiel der erfindungsgemäßen Anlage ist nachstehend anhand der Zeichnung näher erläutert. In der Zeichnung zeigt:
- Fig. 1: eine perspektivische Darstellung einer Anlage zur Entladung von mit Schüttgütern beladenen Schiffen und Lastkraftwagen,
- Fig. 2: eine Draufsicht auf eine Anlage gemäß Fig. 1,
- Fig. 3: eine Ansicht gemäß der Linie III-III in Fig. 2,
- Fig. 4: eine Ansicht in Richtung des Pfeiles IV in Fig. 3,
- Fig. 5: eine Draufsicht auf den Kran gemäß Fig. 3,
- Fig. 6: das Annahmesilo als Einzelteil,
- Fig. 7: das Annahmesilo gemäß Fig. 6, jedoch um 90° gedreht,
- Fig. 8: eine Draufsicht auf das Annahmesilo,
- Fig. 9: eine Vorderansicht der Anlage gemäß Fig. 1,
- Fig. 10: eine Ansicht der Anlage in Richtung des Pfeiles X in Fig. 1.

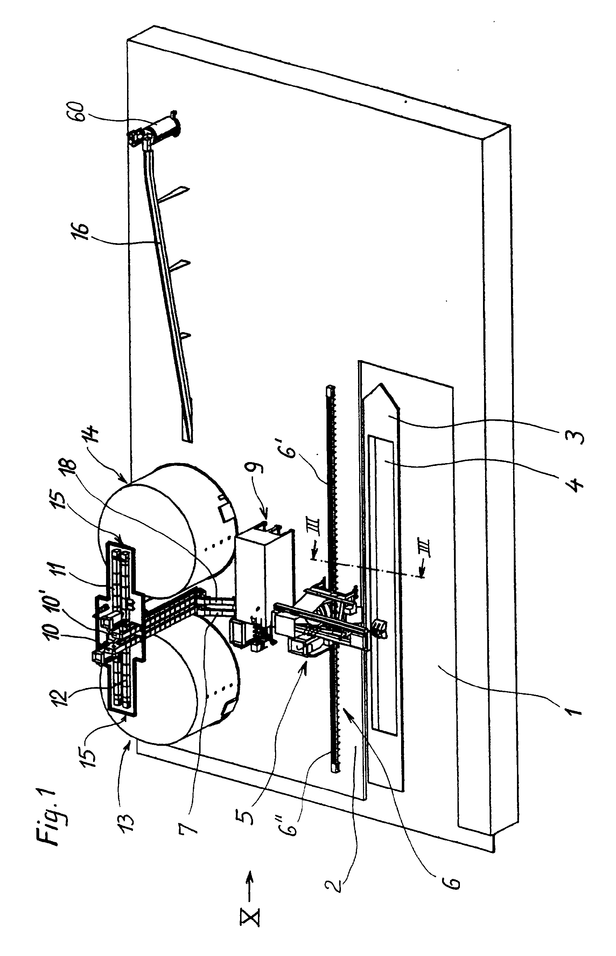

Die Fig. 1 zeigt in perspektivischer Ansicht eine Anlage zur Entladung von Schüttgütern, insbesondere von schwerfließenden Schüttgütern aus Transportfahrzeugen. Diese Anlage ist benachbart zu einem Hafenbecken 1 vorgesehen, wobei sich entlang des Hafenbeckens 1 eine Kaimauer 2 erstreckt, an der ein Schiff 3 zum Zweck des Löschens seiner Ladung festgemacht werden kann. Das Schiff 3 besitzt einen Laderaum 4, der nach oben hin zu öffnen ist, damit mittels eines Krans 5 das Schüttgut aus dem Laderaum 4 herausgeholt werden kann.

Parallel zum Verlauf der Kaimauer 2 ist eine erste Fördereinrichtung 6 angeordnet, die zwei Bandförderer 6' und 6'' umfaßt. Der Kran 5 ist so gestaltet, daß er entlang der Fördereinrichtung 6 über deren gesamte Längsachse verfahrbar ist. Auf diese Weise ist es möglich, daß der Kran den Laderaum 4 über dessen gesamte axiale Erstreckung zu entleeren vermag. Die beiden Bandförderer 6' und 6'' haben gegenläufige Förderrichtungen, und zwar in Richtung auf eine Abwurfstelle 17 im Bereich eines Kettenförderers 7, so daß das Schüttgut an der Abwurfstelle 17 auf den Kettenförderer 7 übergeben wird. Der Kettenförderer 7 verläuft im wesentlichen orthogonal zu der ersten Fördereinrichtung 6. Der Kettenförderer 7 verläuft bis zu einem Becherwerk 10, welches im Zwischenraum zwischen zwei Vorratssilos 13 und 14 angeordnet ist.

Im Bereich zwischen der ersten Fördervorrichtung 6 und den Vorratssilos 12 und 13 befindet sich eine Annahmehalle 9 für LKW, in denen diese ihre Schüttgutladung abgeben können. Von dieser Annahmehalle 9 führt ein weiterer Kettenförderer 18, der im wesentlichen parallel zum Kettenförderer 7 verläuft, zu einem zweiten Becherwerk 10', das in unmittelbarer Nachbarschaft des Becherwerkes 10 angeordnet ist. Oberhalb der beiden Vorratssilos 13 und 14 verlaufen zwei Kettenförderer 11 und 12, die das Schüttgut von den Becherwerken 10 und 10' übernehmen und jeweils den Vorratssilos 13 und 14 zuführen. Die Enden der Kettenförderer 11 und 12 befinden sich jeweils über Einfüllöffnungen 15 an den Vorratssilos 13 und 14, so daß das Schüttgut durch diese Einfüllöffnungen 15 in die Vorratssilos 13 und 14 gegeben wird. Von den Vorratssilos 13 und 14 führt ein Rohrförderer 16 zu einem Vorlagesilo 60, in dem das Schüttgut den weiteren Anlagen dosiert zugeführt wird. Dieses Vorlagesilo 60 ist vorzugsweise mit einer Austrageeinrichtung ausgestattet, die im wesentlichen derjenigen im Annahmesilo entspricht, wobei die Anordnung und Konfiguration der Schnecken auch variiert werden kann. Im Falle von zerkleinertem Altholz kann es sich bei einer nachgeordneten Verarbeitungsanlage beispielsweise um ein MDF-Plattenwerk handeln.

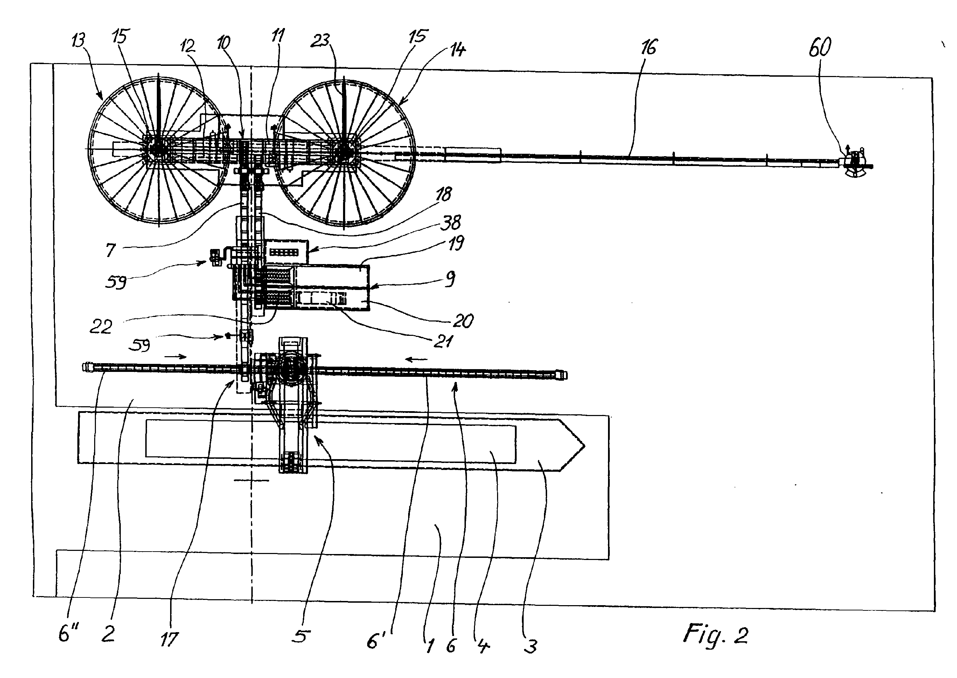

Die Fig. 2 zeigt eine Draufsicht auf eine Anlage der Fig. 1. Für gleiche Teile sind die Bezugszeichen aus Fig. 1 übernommen. Aus Fig. 2 ist ersichtlich, daß die Fördereinrichtung 6 insgesamt nahezu die gleiche Länge aufweist wie die Längserstreckung der Kaimauer 2. Dabei ist der Bandförderer 6' erheblich länger als der Bandförderer 6'', wobei die Förderrichtung beider Bandförderer 6' und 6'' gegenläufig ist. Beide Bandförderer 6' und 6'' haben eine gemeinsame Abwurfstelle 17, an welcher sie das Schüttgut an den Kettenförderer 7 übergeben. Dem Kettenförderer 7 ist benachbart zur übergabestelle 17 eine Staubabsaugeinrichtung 59 zugeordnet. Aus Fig. 2 ist weiterhin zu ersehen, daß die Annahmehalle 9 für die Entladung von Lastkraftwagen zwei nebeneinanderliegende Kammern 19, 20 umfaßt, so daß gleichzeitig zwei Lastkraftwagen 21 entladen werden können. Die Entladung der Lastkraftwagen 21 erfolgt ausschließlich bei geschlossenen Toren der Annahmehalle 9. Zur Staubabsaugung in den Kammern 19, 20 ist mindestens ein Gerät 38 vorgesehen, wobei gemäß Fig. 2 auch jeder Kammer 19, 20 ein separates Gerät 38 zugeordnet sein kann.

Das Schüttgut wird von den Lastkraftwagen 21 auf eine Austragsvorrichtung 22 geschüttet, welche das Schüttgut in Richtung auf den Kettenförderer 18 bewegt und das Schüttgut über diesem abwirft. Der Kettenförderer 18 transportiert das Schüttgut zu dem Becherwerk 10', welches unmittelbar neben dem Becherwerk 10 angeordnet ist. über den Kettenförderer 12 kann je nach Transportrichtung des Kettenförderers das Schüttgut in das Vorratssilo 13 oder das Vorratssilo 14 gegeben werden. Wie aus Fig. 2 außerdem zu ersehen ist, befindet sich in jedem der Vorratssilos 13, 14 eine Austragsvorrichtung 23, 24, welche zur Entnahme von Schüttgut aus dem Vorratssilo 13, 14 dienen.

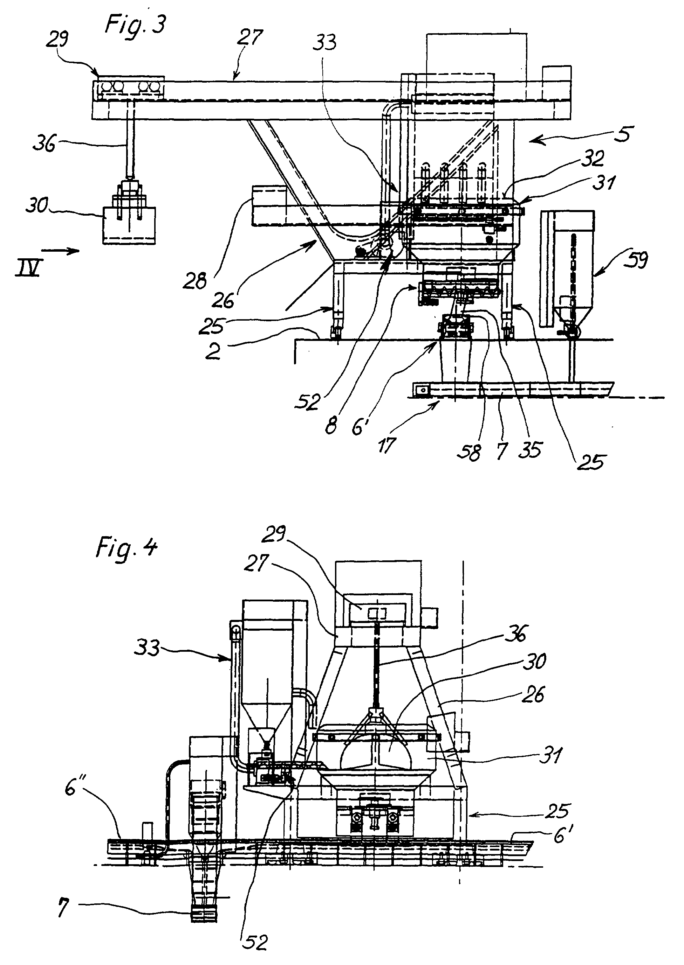

In Fig. 3 ist ein Schnitt entlang der Linie III-III in Fig. 1 gezeigt. Aus dieser Darstellung ist die Gestalt des Kranes 5 näher ersichtlich. Der Kran 5 umfaßt ein Fahrwerk 25, auf dem ein Krangestell 26 abgestützt ist. Durch das Fahrwerk 25 ist der Kran 5 parallel zu dem Bandförderer 6' auf der Kaimauer 2 verfahrbar. Das Krangestell 26 bildet eine Brücke über dem Bandförderer 6' und trägt einen Kranausleger 27, der sich über den Rand der Kaimauer 2 hinaus über das Hafenbecken 1 erstreckt. Auf dem Kranausleger 27 ist eine Laufkatze 29 verfahrbar, über die ein Kranseil 36 geführt ist, an dem ein Greifer 37 hängt. Der Greifer 37 ist bis in einen Laderaum 4 des Schiffes 3 absenkbar. An dem Krangestell 26 ist ein Führerstand 28 angeordnet, von dem aus der gesamte Weg des Greifers 37 gut einsehbar ist.

In dem Krangestell 26 ist ein Annahmesilo 31 angeordnet, dessen Hochachse im wesentlichen mittig über dem Bandförderer 6' angeordnet ist. Das Annahmesilo 31 weist an seiner Oberseite eine Eintrittsöffnung 32 auf, durch die der Greifer 37 in das Annahmesilo 31 absenkbar ist. Auf diese Weise kann der Greifer 30 innerhalb des Annahmesilos 31 geöffnet werden, so daß die Übergabe des Schüttgutes in einem nahezu geschlossenen Raum möglich ist. Um eine Staubemission zu vermeiden, ist ein Gerät 33 zur Staubabsaugung vorgesehen, das unmittelbar an dem Annahmesilo 31 angeordnet ist. Ein solches Gerät 33 zur Staubabsaugung besitzt vorzugsweise einen Förderer 52, durch die die festen Partikel nach Trennung von dem Luftstrom in den Innenraum des Annahmesilos 31 rückführbar sind. Im unteren Bereich des Annahmesilos 31 ist eine Austrageeinrichtung 8 vorgesehen, die das Schüttgut zu Abwurföffnungen 35 an der Unterseite des Annahmesilos 31 fördert. Durch die Abwurföffnungen 35 wird das Schüttgut auf den Bandförderer 6' gegeben.

Der in Fig. 3 gezeigte Bandförderer 6' ist geschlossen, das heißt, über dem Band befindet sich eine Abdeckung 58, die einen gegen außen abgeschlossenen Transportraum des Bandförderers bildet. Diese Abdeckung 58 wird immer nur an der Stelle etwas geöffnet, über der sich die Abwurföffnungen 35 des Annahmesilos 31 befinden. Im Bereich der Abwurföffnungen 35 ist die Vorrichtung so gestaltet, daß ein selbsttätiges öffnen zum Einragen der Abwurföffnungen 35 möglich ist.

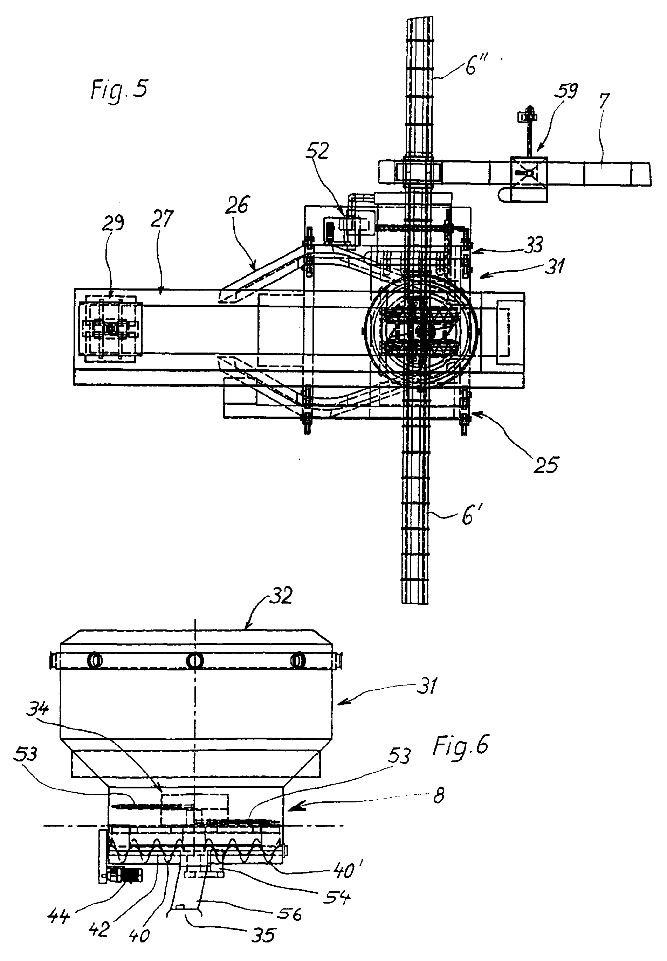

Die Fig. 4 zeigt eine Ansicht des Kranes 5 in Richtung des Pfeiles IV in Fig. 3. Dabei ist jedoch der Greifer 30 in der im Annahmesilo 31 befindlichen Position dargestellt, so daß der Greifer 30 geöffnet werden kann und das Schüttgut abgegeben wird. Die Fig. 5 zeigt eine Draufsicht auf den Kran 5, wobei die Laufkatze 29 am äußeren Ende des Kranauslegers 27 befindlich ist entsprechend der Darstellung in Fig. 3. Im übrigen stimmen die Bezugszeichen der Fig. 4 und 5 für gleiche Teile mit denjenigen der Fig. 3 überein.

In den Fig. 6, 7 und 8 ist das Annahmesilo 31 in verschiedenen Ansichten dargestellt. Schüttgüter mit niedrigen Schüttgewichten neigen meist zum Verdichten. Unter der Last ihres Eigengewichts entstehen bei der Lagerung in Silos Kompaktierungen. Dabei wird das Fließverhalten schlechter. Dies trifft besonders dann zu, wenn es sich um spanförmige, flächige oder faserförmige Schüttgüter handelt. Bei Verdichtung verzahnen sie sich ineinander oder verfilzen miteinander. Feuchte Schüttgüter neigen außerdem zum Verkleben, wodurch die Tendenz zur Brückenbildung verstärkt wird. Um derartige Störungen zu verhindern und um selbst bei schwierigen Schüttgütern hohe Dosiergenauigkeiten zu erzielen, ist in dem Annahmesilo 31 die Austrageeinrichtung 8 vorgesehen, die ein Rotorsystem 34 und Austragsschnecken 39, 40 umfaßt.

Die Austrageeinrichtung 8 ist mit flexiblen Schlepparmen 53, an denen Grabwerkzeuge angeordnet sind, ausgerüstet. Diese sind individuell auf das Schüttgutverhalten ausgelegt, wodurch Verdichtungen verhindert und gebildete Brücken zum Einsturz gebracht werden. Das Rotorsystem 34 hat die Aufgabe, die Fließbewegung des Schüttgutes im Silo aufrechtzuerhalten. Dabei gräbt sich das Räumwerkzeug des oberen Schlepparmes 53 oberhalb des Bunkerbodens in das Schüttgut ein. Der untere Schlepparm 53 sorgt für die Zuführung des Schüttgutes zu den Austrageschnecken 39, 40 und schließlich Abwurföffnungen 35 und ermöglicht eine weitestgehende Restentleerung. Um eine Kompaktierung des Schüttgutes zu vermeiden, kann die Rotordrehzahl der Austragemenge angepaßt werden. Ein Antrieb 54 für das Rotorsystem 34 ist platzsparend unter dem Siloboden angeordnet. Die Schlepparme 53 sind als elastische Blattfederpakete aus Federstahl hergestellt.

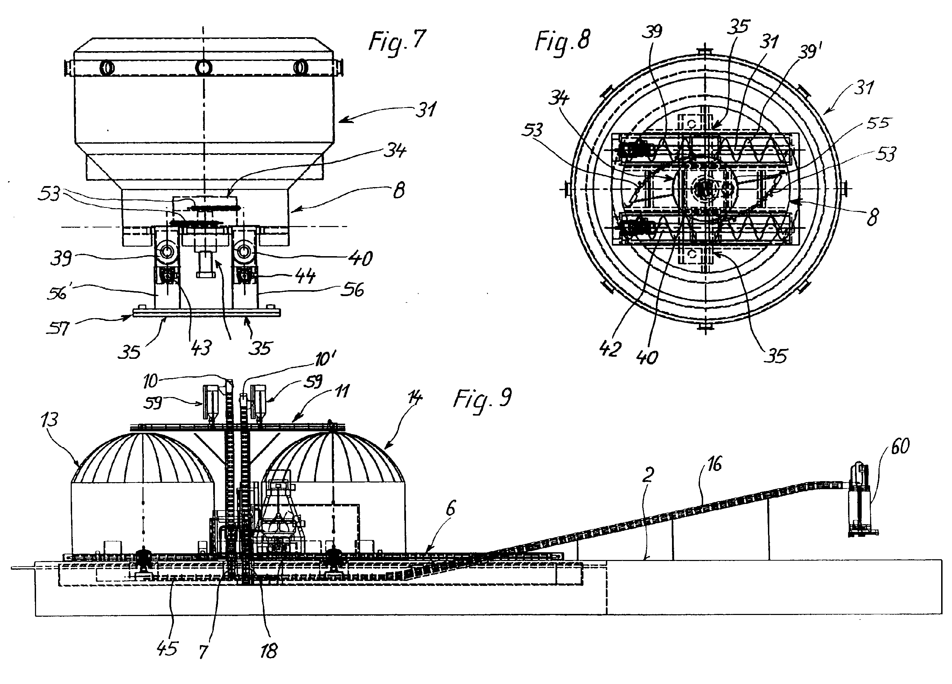

Die Austrageschneckenanordnung umfaßt insgesamt vier Schnecken 39, 39' sowie 40, 40', wobei jeweils zwei Schnecken 39, 39' bzw. 40 und 40' auf einer gemeinsamen Welle 41 bzw. 42 angeordnet und die auf derselben Welle angeordneten Schnecken 39, 39' bzw. 40, 40' gegenläufig gewendelt sind. Die Schnecken erweitern das Volumen zwischen den Schneckenflügeln in Förderrichtung, so daß in diesem Bereich das Schüttgut nicht verdichtet wird. Für jede der Wellen 41, 42 ist ein Antriebsmotor 43, 44 vorgesehen, wobei diese Antriebsmotoren 43, 44 an der Unterseite der Austragsvorrichtung 34 vorgesehen sind. Wie aus Fig. 8 ersichtlich ist, befindet sich zwischen den Schneckenpaaren 39, 39', 40, 40' eine Rotortrommel 55, an der die Schlepparme 53 befestigt sind. Jedes Schneckenpaar 39, 39' bzw. 40, 40' fördert zu einer der Abwurföffnungen 35, 35', die gemäß Darstellung in Fig. 7 an Schächten 56, 56' ausgebildet sind. Am unteren Ende der Schächte 56, 56' befindet sich eine Vorrichtung 57 zum partiellen öffnen der in Fig. 3 gezeigten Abdeckung 58 über dem Bandförderer 6'.

Die Fig. 9 zeigt eine Vorderansicht der Anlage gemäß Fig. 1. Die Bezugszeichen in Fig. 9 stimmen für gleiche Teile mit denjenigen der Fig. 1 und 2 überein. Aus Fig. 9 wird deutlich, daß der Austrag aus den Vorratssilos 13, 14 über eine im Zentrum des Silobodens zu einer zunächst unterirdisch verlaufenden Fördereinrichtung 45 erfolgt. Dabei kann es sich auch um einen Förderer handeln, der in ein Rohr bzw. einen gerollten Schlauch eintritt und als in der Zeichnung dargestellter Rohrförderer 16 aus dem Niveau der Kaimauer 2 herausgeführt wird. Alternativ dazu könnte auch eine pneumatische Förderung eingesetzt werden.

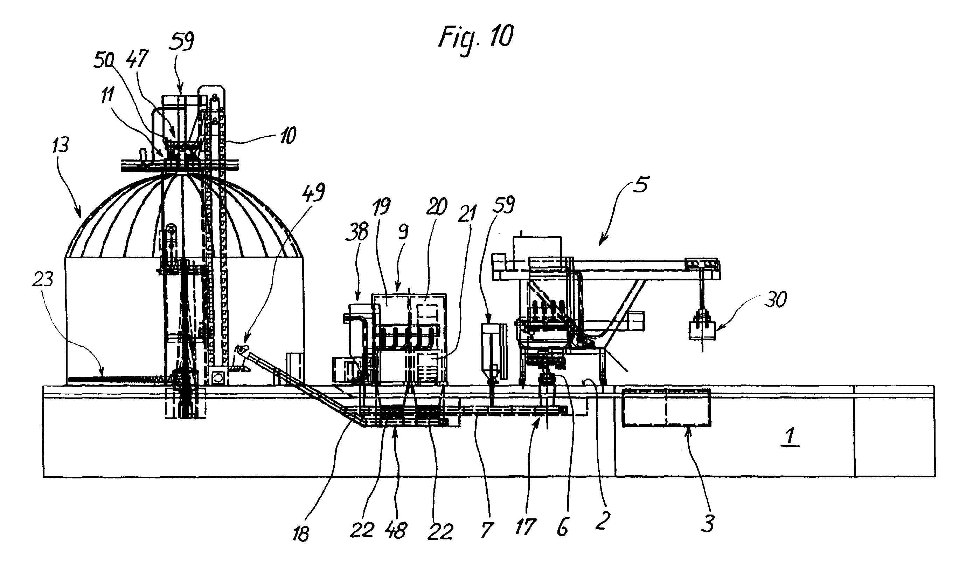

Die Fig. 10 zeigt eine Ansicht der Anlage in Richtung des Pfeiles X in Fig. 1. Aus dieser Darstellung ist ersichtlich, daß die zwei Kammern 19, 20 separat in der Annahmehalle 9 gebildet sind, so daß zwei Lastkraftwagen 21 zur gleichen Zeit entladen werden können. Zur Absaugung von Staub ist das Gerät 38 vorgesehen. Das Schüttgut wird jeweils über eine Austragsvorrichtung 22 dem Kettenförderer 18 zugeführt. Dort ist somit eine übergabestelle 48 für das Schüttgut auf den Kettenförderer 18 vorgesehen, der wiederum für die Übergabe des Schüttgutes im Bereich einer übergabestelle 49 an das Becherwerk 10' sorgt. Ferner zeigt Fig. 10, daß oberhalb der Kettenförderer 11, 12 eine Förderschnecke 50 vorgesehen ist, welche das Schüttgut vom Becherwerk 10 dem Kettenförderer 11 zuführt. Auch für den Wechsel des Schüttgutes von den Becherwerken 10, 10' auf die Kettenförderer 11, 12 ist eine übergabestelle 47 vorgesehen. Im übrigen stimmen für gleiche Teile die Bezugszeichen mit den vorhergehenden Figuren überein.

Es sei an dieser Stelle darauf hingewiesen, daß möglichst alle übergabestellen 17, 47, 48, 49 gekapselt sein sollten und eine Vorrichtung zur Staubabsaugung im Bereich dieser Übergabestellen vorgesehen ist. Die festen Partikel werden dem Schüttgut wieder zugeführt und verbleiben somit ausnahmslos im Schüttgut. Dagegen besteht aber auch die Möglichkeit, die abgesaugten festen Partikel zu separieren und einer gesonderten Aufbereitung oder Verbrennung zuzuführen.

## Patentansprüche

1. Anlage zur Entladung von insbesondere schwerfließenden Schüttgütern aus Transportfahrzeugen (3, 21) mit mindestens einer länglichen Fördereinrichtung (6) und einem bezogen auf die Längsachse der Fördereinrichtung (6) ortsveränderlichen Kran (5), der einen Greifer (30) umfaßt, welcher vertikal und im wesentlichen quer zur Längsachse der Fördereinrichtung (6) bewegbar ist und mit einem in Längsrichtung der Fördereinrichtung (6) verfahrbaren Annahmesilo (31), das an seiner Oberseite eine Eintrittsöffnung (32) für den Greifer (30) in den Innenraum des Annahmesilos (31) aufweist und an seiner Unterseite mit mindestens einer Abwurföffnung (35) versehen ist, wobei diese Abwurföffnung (35) sich stets über der Fördereinrichtung (6) befindet.

2. Anlage nach Anspruch 1,
**dadurch gekennzeichnet, daß** der Kran (5) ein Fahrwerk (25) aufweist, mit dem dieser parallel zur Längsachse der Fördereinrichtung (6) verfahrbar ist.

3. Anlage nach Anspruch 2,
**dadurch gekennzeichnet, daß** in einem vom Fahrwerk (25) getragenen Krangestell (26) das Annahmesilo (31) installiert ist, wobei vorzugsweise auf dem Krangestell (26) ein Kranausleger (27) mit einer an diesem verfahrbaren Laufkatze (29) angeordnet ist.

4. Anlage nach einem der Ansprüche 1 bis 3,
**dadurch gekennzeichnet, daß** das Annahmesilo (31) mit einem Gerät (33) zur Staubabsaugung versehen und vorzugsweise das Gerät (33) unmittelbar an dem Annahmesilo (31) angeordnet und mit einem Förderer (52) zur Rückführung fester Partikel in den Innenraum des Aufnahmesilos (31) versehen ist.

5. Anlage nach einem der Ansprüche 1 bis 4,
**dadurch gekennzeichnet, daß** die Fördereinrichtung (6) ein Bandförderer (6', 6'') mit einer über diesem angeordneten Abdeckung (58) ist, wobei diese Abdeckung (58) an jeder beliebigen Stelle über die Länge des Bandförderers (6', 6'') partiell zu öffnen ist.

6. Anlage nach einem der Ansprüche 1 bis 5,
**dadurch gekennzeichnet, daß** im unteren Bereich des Annahmesilos (31) eine zur Abwurföffnung (35) fördernde Austrageeinrichtung (8) aufweist, wobei insbesondere die Austrageeinrichtung (8) ein Rotorsystem (34) mit Schlepparmen (53) umfaßt.

7. Anlage nach Anspruch 6,
**dadurch gekennzeichnet, daß** die Austrageeinrichtung (8) mindestens zwei, vorzugsweise vier Förderschnecken (39, 39', 40, 40') umfaßt, wobei vorzugsweise je zwei Förderschnecken (39, 39' bzw. 40, 40') auf einer gemeinsamen Welle (41 bzw. 42) angeordnet sind, wobei die Förderschnecken (39, 39' bzw. 40, 40') gegenläufig gewendelt sind.

8. Anlage nach einem der Ansprüche 1 bis 7,
**dadurch gekennzeichnet, daß** der Greifer (30) aus mindestens zwei Gehäuseteilen besteht, die den Hohlraum im Greifer (30) mindestens annähernd vollständig schließen.

9. Anlage nach einem der Ansprüche 1 bis 8,
**dadurch gekennzeichnet, daß** die Fördereinrichtung (6) eine Abwurfstelle (17) aufweist, an der das Schüttgut an eine weitere Fördereinrichtung (7) übergeben wird.

10. Anlage nach Anspruch 9,
**dadurch gekennzeichnet, daß** mindestens ein der weiteren Fördereinrichtung (7) nachgeschaltetes Vorratssilo (13, 14) vorgesehen ist.

11. Anlage nach Anspruch 10,
**dadurch gekennzeichnet, daß** zwischen der weiteren Fördereinrichtung (7) und den Vorratssilos (13, 14) zusätzliche Fördereinrichtungen ( 10, 11, 12) vorgesehen sind, die mindestens ein Becherwerk (10) umfassen, wobei vorzugsweise an einem Teil der übergabestellen (17, 47, 48, 49) oder an allen Übergabestellen des Schüttgutes der jeweiligen Fördereinrichtungen (7, 18, 10, 10', 11, 12) Mittel (59) zur Staubabsaugung vorgesehen sind.

12. Anlage nach Anspruch 10,
**dadurch gekennzeichnet, daß** eine Annahmehalle (9) zur Entleerung von Lastkraftwagen (21) vorgesehen ist, unterhalb von der das Schüttgut von einer in Richtung auf das Vorratssilo (13, 14) fördernden Fördereinrichtung (18) aufnehmbar ist, wobei die Annahmehalle (9) mit einem Gerät (38) zur Staubabsaugung vorgesehen ist.

13. Anlage nach einem der Ansprüche 10 bis 12,
**dadurch gekennzeichnet, daß** das Vorratssilo (13, 14) mit einem Bunkeraufsatzfilter versehen ist.
